# EUROPÄISCHE PATENTSCHRIFT

(11) **EP 3 865 342 B1**
(45) Veröffentlichungstag und Bekanntmachung des Hinweises auf die Patenterteilung: **23.04.2025**
(21) Anmeldenummer: 21155600.6
(22) Anmeldetag: 05.02.2021
(51) Int. Cl.: B60N 2/50, B60N 2/52, B60N 2/16

(54) **FAHRZEUGSITZ MIT EINER VORRICHTUNG ZUR NIVEAUREGULIERUNG UND -STABILISIERUNG**
VEHICLE SEAT WITH DEVICE FOR LEVELLING AND STABILISATION
SIÈGE DE VÉHICULE DOTÉ D'UN DISPOSITIF DE RÉGULATION ET DE STABILISATION DU NIVEAU

(30) Priorität: 13.02.2020 DE 102020103782
(43) Veröffentlichungstag der Anmeldung: 18.08.2021
(73) Patentinhaber: GRAMMER AG, 92289 Ursensollen (DE)
(72) Erfinder: Lorey, Konstantin, 92546 Schmidgaden (DE); Krivenkov, Konstantin, 92224 Amberg (DE); Haller, Erwin, 92262 Birgland (DE)
(74) Vertreter: Hannke Bittner & Partner mbB Regensburg

(56) Entgegenhaltungen:
- EP-A1- 2 062 758
- EP-A1- 3 312 049

## Beschreibung

Die Erfindung betrifft einen Fahrzeugsitz mit einem Fahrzeugsitzoberteil, auf welchem eine Masse anordenbar ist, einem Fahrzeugsitzunterteil und mit einer Vorrichtung zur Niveauregulierung und -stabilisierung des Fahrzeugsitzoberteils, wobei die Vorrichtung eine Luftfeder aufweist, mittels welcher eine Relativbewegung des Fahrzeugsitzunterteils und des Fahrzeugsitzoberteils zueinander federbar ist, wobei das Fahrzeugsitzunterteil und das Fahrzeugsitzoberteil in einem nicht-ausgelenkten Zustand in einem vorgebbaren Abstand zueinander angeordnet sind und wobei die Luftfeder mit einem Volumen eines Arbeitsvolumens eines Zusatzvolumenmoduls durch eine erste Fluidverbindung fluidisch verbunden ist.

Es sind aus dem Stand der Technik derartige Fahrzeugsitze mit einer Niveauregulierung bekannt. Um den Innendruck der ersten Luftfeder zu manipulieren, ist es notwendig, eine bestimmte Fluidmenge von dem Zusatzvolumen oder der ersten Luftfeder umzupumpen oder den Innendruck des gesamten Systems bestehend aus Zusatzvolumen und erster Luftfeder zu verändern.

Es ist daher ein Kompressor vorgesehen, mittels welchem der Innendruck in dem Zusatzvolumen und der ersten Luftfeder veränderbar ist.

Der Kompressor wird entsprechend oft aktiviert, um den vorgegebenen Abstand zwischen dem unteren und oberen Sitzelement unter allen Betriebsbedingungen möglichst konstant zu halten. Da jedoch der Kompressor sehr laut ist, ist es nachteilig für einen Fahrzeugführer, wenn der Kompressor über einen langen Zeitraum hinweg aktiv ist und die Geräuschkulisse unerträglich macht. Auch können Geräusche hierdurch leichter überhört werden, sowie die laute Geräuschkulisse unter anderem zu Ohrenleiden, Kopfschmerzen oder dergleichen führen. Ebenso ist der Kompressor relativ langsam anzusteuern, wodurch die Bereitstellung von Fluid für eine schnelle und dynamische Niveauregulierung- und -stabilisierung nicht ausreicht. Die EP3312049A1 offenbart ein Fahrzeugsitz mit einem Fahrzeugsitzoberteil, einem Fahrzeugsitzunterteil und mit einer Vorrichtung zur Niveauregulierung und -Stabilisierung des Fahrzeugsitzoberteils.

Es ist demzufolge Aufgabe der vorliegenden Erfindung, einen Fahrzeugsitz mit einer Vorrichtung zur Niveauregulierung und -stabilisierung bereitzustellen, welche im Betrieb auf einen Kompressor verzichten kann und daher entsprechend leise im Betrieb ist und ebenso die Lage des Fahrzeugsitzoberteils hinsichtlich der Erdoberfläche nicht verändert und entsprechend schnell ist.

Diese Aufgabe wird gemäß den Merkmalen des Anspruchs 1 bzw. des Anspruchs 12 gelöst. Vorteilhafte Ausgestaltungen der Erfindung finden sich in den abhängigen Patentansprüchen. Kerngedanke der Erfindung ist es, einen Fahrzeugsitz mit einem Fahrzeugsitzoberteil, auf welchem eine Masse anordenbar ist, einem Fahrzeugsitzunterteil und mit einer Vorrichtung zur Niveauregulierung und -stabilisierung des Fahrzeugsitzoberteils, wobei die Vorrichtung eine Luftfeder aufweist, mittels welcher eine Relativbewegung des Fahrzeugsitzunterteils und des Fahrzeugsitzoberteils zueinander federbar ist, wobei das Fahrzeugsitzunterteil und das Fahrzeugsitzoberteil in einem nicht-ausgelenkten Zustand in einem vorgebbaren Abstand zueinander angeordnet sind und wobei die Luftfeder mit einem Volumen eines Arbeitsvolumens eines Zusatzvolumenmoduls durch eine erste Fluidverbindung fluidisch verbunden ist, wobei der Fahrzeugsitz eine Steuereinheit aufweist, wobei die Steuereinheit dazu vorgesehen und ausgebildet ist, bei einer Vergrößerung des Abstand aufgrund der Relativbewegung das Volumen des Arbeitsvolumens derart zu verringern, dass ein Druck in der Luftfeder derart veränderbar ist, so dass der Abstand des Fahrzeugsitzoberteils zu einer Referenzfläche im Wesentlichen unverändert ist, und bei einer Verringerung des Abstands aufgrund der Relativbewegung das Volumen des Arbeitsvolumens derart zu vergrößern, so dass der Druck in der Luftfeder derart veränderbar ist, so dass der Abstand des Fahrzeugsitzoberteils zu einer Referenzfläche im Wesentlichen unverändert ist.

Dadurch, dass der Druck in der Luftfeder, je nach Ausgestaltung der Luftfeder, im Wesentlichen unverändert bleibt bzw. je nach Situation dynamisch angepasst werden kann, wird erreicht, dass sich die Position des Fahrzeugsitzoberteils relativ zu der Erdoberfläche im Wesentlichen nicht ändert, oder anders gesagt, im Wesentlichen konstant ist.

Unter der Referenzfläche ist eine Fläche derart zu verstehen, welche sich bei einer Auslenkung des Fahrzeugs nicht in seiner Lage verändert. Die Referenzfläche kann dabei mittels der Erdoberfläche ausgebildet sein.

Bevorzugt ist die Luftfeder deformierbar ausgestaltet. Weiter bevorzugt weist der Fahrzeugsitz ein Scherengestell auf, welches zwischen dem Fahrzeugsitzunterteil und dem Fahrzeugsitzoberteil angeordnet ist und das Fahrzeugsitzoberteil mit dem Fahrzeugsitzunterteil verbindet. Selbstverständlich sind auch noch andere Verbindungsarten möglich, etwa ein Parallelogrammanordnung oder dergleichen. Die Verbindung zwischen dem Fahrzeugsitzoberteil und dem Fahrzeugsitzoberteil soll die beiden Teile zueinander führen und eine Relativbewegung ermöglichen.

Vorzugsweise ist das Fahrzeugsitzunterteil mit einer Fahrzeugkarosserie oder einer Fahrzeugkabine verbunden oder ist bereits Teil der Karosserie. Hierdurch wird erreicht, dass sich das Fahrzeugsitzunterteil synchron mit dem jeweiligen Bauteil bewegt, also ohne einen Phasenversatz. Dies ist insbesondere dafür vorgesehen, da für einen vollständigen Ausgleich das Fahrzeugsitzunterteil die gleiche Bewegung ausführen sollte.

Unter dem Begriff "Masse" ist hierbei jeglicher Körper zu verstehen, welcher auf dem Fahrzeugsitzoberteil anordenbar ist. Bevorzugt handelt es sich bei einer Masse um einen Fahrzeugführer, welcher auf dem Fahrzeugsitz, insbesondere dem Fahrzeugsitzoberteil, sitzt.

Unter dem Begriff "Zusatzvolumenmodul" ist hierbei eine Vorrichtung zu verstehen, welche zumindest das Arbeitsvolumen, insbesondere ein begrenztes Arbeitsvolumen umfasst. Weiter ist es denkbar, dass das Zusatzvolumenmodul ein Absperrventil aufweist, so dass die Luftfeder fluidisch von dem Zusatzvolumen getrennt ist. Darüber hinaus kann das Zusatzvolumenmodul verschiedene Sensoren umfassen, beispielsweise um Leckagen zu detektieren oder dergleichen.

Dabei können verschiedene Fahrsituationen für den Fahrzeugsitz auftreten: das Fahrzeug fährt in ein Schlagloch oder dergleichen, das Fahrzeug fährt über eine Erhöhung oder das Fahrzeug wird nicht ausgelenkt.

Wird das Fahrzeug nicht ausgelenkt, so wirkt keine Kraft auf den Fahrzeugsitz ein und der Fahrzeugsitz bleibt dabei hinsichtlich des Abstandes unverändert.

Die Situation für den Fahrzeugsitz ändert sich, falls das Fahrzeug durch ein Schlagloch, eine Vertiefung oder dergleichen fährt. Dadurch, dass vorzugsweise der Fahrzeugsitz mit dem Fahrzeug, der Fahrzeugkarosserie oder der Fahrzeugkabine verbunden ist, bewegt sich das Fahrzeugsitzunterteil entsprechend der Bewegung des Anbindungsteils mit nach unten, das heißt, dass das Fahrzeugsitzunterteil relativ zu dem Fahrzeugsitzoberteil bewegt wird, so dass der Abstand zwischen diesen erhöht wird.

Wird erkannt, dass sich der Abstand des Fahrzeugsitzunterteils zu dem Fahrzeugsitzoberteil vergrößert, so wird erfindungsgemäß das Volumen des Arbeitsvolumens derart geändert, dass das Volumen des Arbeitsvolumens verringert wird, so dass der Druck in der Luftfeder derart veränderbar ist, so dass der Abstand des Fahrzeugsitzoberteils zu einer Referenzfläche im Wesentlichen unverändert ist.

Die Situation für den Fahrzeugsitz ändert sich, falls das Fahrzeug über eine Erhöhung oder dergleichen fährt. Dadurch, dass vorzugsweise der Fahrzeugsitz mit dem Fahrzeug, der Fahrzeugkarosserie oder der Fahrzeugkabine verbunden ist, bewegt sich das Fahrzeugsitzunterteil entsprechend der Bewegung des Anbindungsteils mit nach oben, das heißt, dass das Fahrzeugsitzunterteil relativ zu dem Fahrzeugsitzoberteil bewegt wird, so dass der Abstand zwischen diesen verringert wird.

Wird erkannt, dass sich der Abstand des Fahrzeugsitzunterteils zu dem Fahrzeugsitzoberteil verringert, so wird erfindungsgemäß das Volumen des Arbeitsvolumens derart geändert, dass das Volumen des Arbeitsvolumens vergrößert wird, so dass der Druck in der Luftfeder derart veränderbar ist, so dass der Abstand des Fahrzeugsitzoberteils zu einer Referenzfläche im Wesentlichen unverändert ist.

Die Änderung des Volumens des Arbeitsvolumens wird durch eine Steuereinheit vorgenommen, welche gemäß einer besonders bevorzugten Ausführungsform an oder in dem Zusatzvolumenmodul angeordnet ist.

Gemäß einer weiteren bevorzugten Ausführungsform weist die Vorrichtung eine Erkennungseinheit auf, welche dazu ausgebildet und vorgesehen ist, die Änderung des Abstands zu erkennen, wobei die Steuereinheit mit der Erkennungseinheit signaltechnisch verbunden ist und abhängig von der erkannten Änderung des Abstands und gegebenenfalls abhängig von Beschleunigungswerten an dem Fahrzeugsitzunterteil und dem Fahrzeugsitzoberteil das Volumen des Arbeitsvolumens ändert.

Gemäß einer bevorzugten Ausführungsform weist die Erkennungseinheit einen ersten Sensor, angeordnet an dem Fahrzeugsitzoberteil, einen zweiten Sensor, angeordnet an dem Fahrzeugsitzunterteil, und einen dritten Sensor zum Bestimmen einer Position des Fahrzeugsitzoberteils relativ zu dem Fahrzeugsitzunterteil auf.

Bevorzugt umfasst die Erkennungseinheit als den dritten Sensor einen Abstandssensor, welcher ausgebildet und vorgesehen ist, den Abstand des Fahrzeugsitzoberteils zu dem Fahrzeugsitzoberteil zu erkennen und zu bestimmen. Bevorzugt kann die Relativposition des Fahrzeugsitzoberteils zu dem Fahrzeugsitzunterteil bestimmen werden. Bevorzugt kann es sich bei dem Abstandssensor um einen Winkelsensor handeln, der an der Verbindung zwischen dem Fahrzeugsitzoberteil und dem Fahrzeugsitzunterteil angeordnet ist, handeln. Selbstverständlich sind auch noch weitere Sensorarten denkbar.

Bei dem ersten und dem zweiten Sensor handelt es sich bevorzugt um Sensoren zum Aufnehmen von Beschleunigungen, insbesondere des Fahrzeugsitzoberteils und des Fahrzeugsitzunterteils. So kann bestimmt werden, wie sich das Fahrzeugsitzoberteil und das Fahrzeugsitzoberteil relativ zueinander bewegen.

Weiter wird mittels der Steuereinheit die Änderung des Volumens des Arbeitsvolumens vorgenommen, so dass der Druck in der Luftfeder veränderbar ist.

Gemäß einer weiteren Ausführungsform ist zwischen dem unteren und dem oberen Sitzelement mindestens eine Dämpfungseinheit zum Dämpfen von Schwingungsbewegungen des oberen Sitzelements relativ zum unteren Sitzelement vorgesehen.

Gemäß einer weiteren bevorzugten Ausführungsform ist es vorgesehen, dass die Vorrichtung eine Kompressoreinheit aufweist, welche dazu ausgebildet und vorgesehen ist, die Luftfeder und das Arbeitsvolumen mit einem Fluid zu befüllen, so dass innerhalb der Luftfeder ein bestimmter Druck vorherrscht, wodurch der Abstand vorgegeben ist.

Lässt sich eine Person, also eine Masse, auf dem Fahrzeugsitzoberteil nieder, so möchte er natürlich diejenige Sitzhöhe einstellen, welche für die jeweilige Person als komfortabel und angenehm erachtet wird. Um die entsprechende Sitzhöhe zu erreichen, muss die Luftfeder mit einer gewissen Fluidmenge gefüllt werden, so dass das obere Sitzelement auf die gewünschte Sitzhöhe angehoben wird. Die Luftfeder wird bevorzugt indirekt über das Arbeitsvolumen bzw. das Zusatzvolumenmodul mittels des Kompressors mit einer Fluidmenge befüllt, wobei sich insbesondere ein Druckgleichgewicht in der Luftfeder und dem Arbeitsvolumen einstellt. Alternativ ist es auch denkbar, dass die Luftfeder und das Arbeitsvolumen unabhängig voneinander befüllt werden.

Ist das Fahrzeugsitzoberteil mit der Masse belegt und der Abstand mittels des Kompressors eingestellt, so wird der Kompressor deaktiviert und wird während des Betriebs im Regelfall nicht mehr benötigt. Eine erneute Aktivierung des Kompressors ist nur dann notwendig, wenn eine Leckage oder dergleichen stattfindet oder wenn eine andere Sitzhöhe eingestellt werden soll.

Gemäß einer weiteren bevorzugten Ausführungsform ist es vorgesehen, dass das Zusatzvolumenmodul weiter ein Stützvolumen aufweist, welches mit dem Arbeitsvolumen zur Kraftunterstützung während einer Volumenänderung des Arbeitsvolumens mittels der Steuereinheit verbunden ist.

Insbesondere ist das Stützvolumen mechanisch mit dem Arbeitsvolumen verbunden. Mechanisch verbunden heißt hierbei, dass es eine Verbindung der Bauteile zueinander gibt, welche mechanisch ausgebildet ist. Während des Befüllens ist es denkbar, dass das Stützvolumen und das Arbeitsvolumen zusätzlich fluidisch verbunden sind. Ist die Kompressoreinheit nicht aktiv, das heißt, dass die Sitzhöhe bzw. der Abstand eingestellt sind und keine Befüllung der Luftfeder und des Arbeitsvolumens notwendig ist, so sind das Stützvolumen und das Arbeitsvolumen nur mechanisch verbunden, das heißt, dass es keine fluidische Verbindung zwischen dem Stützvolumen und dem Arbeitsvolumen gibt.

Gemäß einer bevorzugten Ausführungsform ist es vorgesehen, dass das Stützvolumen während dem Befüllen der Luftfeder mit Fluid durch die Kompressoreinheit mittels eines geöffneten Ventils mit dem Arbeitsvolumen fluidisch verbunden ist und ansonsten fluidisch von dem Arbeitsvolumen getrennt sind.

Vorzugsweise ist eine fluidische Verbindungsleitung zwischen dem Stützvolumen und dem Arbeitsvolumen vorgesehen, welche das Ventil aufweist und welche mittels des Ventils geöffnet oder geschlossen werden kann. Eine Steuerung des Ventils kann beispielsweise die Steuereinheit vornehmen, wobei es auch denkbar ist, dass das Ventil manuell betätigt werden kann.

Gemäß einer weiteren bevorzugten Ausführungsform ist es vorgesehen, dass die Steuereinheit einen Linearantrieb aufweist, welcher dazu vorgesehen und ausgebildet ist, das Volumen des Arbeitsvolumens zu ändern.

Besonders bevorzugt ist der Linearantrieb mindestens eines ist ausgewählt aus der Gruppe umfassend eine Spindel-Mutter-Kombination, eine Zahnstange, ein Umwandlungsgetriebe, ein Direktantrieb, eine Kulissenführung und eine Deformationseinrichtung.

Besonders bevorzugt kann es sich bei einem Umwandlungsgetriebe um ein Watt-Umwandlungsgetriebe, ein Chebyschev- Umwandlungsgetriebe, ein Evans- Umwandlungsgetriebe oder dergleichen handeln.

Weiter besonders bevorzugt handelt es sich bei dem Direktantrieb um einen Hubmagnet.

Weiter bevorzugt handelt es sich bei der Deformationseinrichtung um eine Vorrichtung mit einem Motor und einem wippenähnlichen Deformationselement, welches je nach Drehrichtung das Arbeitsvolumen deformiert und entsprechend das Volumen des Arbeitsvolumens ändert.

Gemäß einer weiteren bevorzugten Ausführungsform ist das Arbeitsvolumen als eine Luftfeder mit einem Rollbalg, als eine Balgfeder, ein Luftzylinder oder als ein Luftmotor ausgebildet.

Gemäß einer weiteren bevorzugten Ausführungsform ist das Stützvolumen als eine Luftfeder mit einem Rollbalg, als eine Balgfeder, ein Luftzylinder oder als ein Luftmotor ausgebildet.

Darüber hinaus wird die zugrunde liegende Aufgabe auch gelöst von einem Verfahren zur Niveauregulierung eines Fahrzeugsitzoberteils eines Fahrzeugsitzes (1), wobei der Fahrzeugsitz ein durch eine Luftfeder gegenüber einem Fahrzeugsitzunterteil verlagerbares oberes Fahrzeugsitzoberteil () aufweist, wobei die Luftfeder () mit einem Arbeitsvolumen () eines Zusatzvolumenmoduls () fluidisch verbunden und der Druck in der Luftfeder durch das Arbeitsvolumen verändert wird, umfassend die Verfahrensschritte:
a) Belegen des Fahrzeugsitzoberteils mit einer Masse;
b) Einstellen eines Abstandes zwischen dem Fahrzeugsitzunterteil und dem Fahrzeugsitzoberteil durch Befüllen des Arbeitsvolumens und der Luftfeder durch eine Kompressoreinheit mit einer benötigten Fluidmenge und Deaktivieren der Kompressoreinheit nach dem Befüllen;
c) Erkennen einer Änderung des Abstandes durch eine Relativbewegung des Fahrzeugsitzunterteils und des Fahrzeugsitzoberteils zueinander;
d) Veränderung des Drucks in der Luftfeder durch Veränderung eines Volumens des Arbeitsvolumens, wobei bei einer Vergrößerung des Abstands aufgrund der Relativbewegung das Volumen des Arbeitsvolumens verringert wird und bei einer Verringerung des Abstands aufgrund der Relativbewegung das Volumen des Arbeitsvolumens vergrößert wird, so dass der Druck in der Luftfeder derart verändert wird, dass der Abstand des Fahrzeugsitzoberteils zu einer Referenzfläche im Wesentlichen unverändert ist.

Ein Belegen des Fahrzeugsitzoberteils mit der Masse kann beispielsweise ein Sitzen einer Person auf dem Fahrzeugsitzoberteil des Fahrzeugsitzes bedeuten. Ist das Fahrzeugsitzoberteil mit der Masse, beispielsweise eben der Person, belegt, so kann die Person mittels einer Einstellvorrichtung die gewünschte Sitzhöhe des Fahrzeugsitzes einstellen, welche in einem bestimmten Abstand zwischen dem Fahrzeugsitzunterteil und dem Fahrzeugsitzoberteil resultiert. Entsprechend wird das Arbeitsvolumen und die Luftfeder mittels der Kompressoreinheit mit einer benötigten Fluidmenge befüllt, bis ein notwendiger Innendruck der ersten Luftfeder erreicht wurde. Die Kompressoreinheit wird nach dem Befüllen deaktiviert.

Weiter bevorzugt weist das Zusatzvolumenmodul ein Stützvolumen auf, welches mit dem Arbeitsvolumen zur Kraftunterstützung während einer Volumenänderung des Arbeitsvolumens mittels der Steuereinheit verbunden ist.

Das Stützvolumen ist während dem Befüllen mit Fluid der Luftfeder durch die Kompressoreinheit mittels eines geöffneten Ventils mit dem Arbeitsvolumen fluidisch verbunden und ansonsten fluidisch von dem Arbeitsvolumen getrennt. Nach dem Befüllen des Arbeitsvolumens und des Stützvolumens wird das Stützvolumen von dem Arbeitsvolumen fluidisch getrennt.

Wird dann erkannt, dass eine Änderung des Abstandes durch eine Auslenkung des Fahrzeugsitzunterteils und ggfs. des Fahrzeugsitzoberteils vorliegt, so ist es notwendig, so ist es vorgesehen, dass Volumen des Arbeitsvolumen zu verändern, um den Druck in der Luftfeder derart zu verändern, dass der Abstand des Fahrzeugsitzoberteils zu einer Referenzfläche im Wesentlichen unverändert belassen zu können. Um nicht die Kompressoreinheit verwenden zu müssen, wird hierbei das Volumen des Arbeitsvolumens entsprechend der Änderung des Abstandes mittels der Steuereinheit verändert.

Insgesamt sei hierbei darauf hingewiesen, dass es sich bei der Änderung des Abstandes um eine, im Vergleich zu einer Schwingungsbewegung aufgrund von äußeren Kraftstößen, schnelle Änderung handelt. Eine Änderung des Abstandes erfolgt demnach über einen kurzen Zeitraum. Darüber hinaus ist auch der Betrag der Abstandsänderung einem Betrag eines Kraftstoßes von außen gleichzusetzen.

Weiterhin ist denkbar, eine schnelle Ansteuerung der Vorrichtung zu realisieren, um den vorkommenden Kraftstößen entgegenzuwirken. Hierbei handelt es sich um eine schnelle Niveaustabilisierung relativ zu der Referenzfläche und als Folge der Schwingungsisolation.

Alternativ ist auch eine manuelle Änderung des Abstandes mittels der Vorrichtung und nicht durch den Betrieb eines Kompressors möglich. Hierbei handelt es sich um eine manuelle Niveauregulierung.

Die vorrichtungsseitigen Merkmale können in korrespondierender Weise auch als verfahrensseitige Merkmale verwendet werden.

Weitere vorteilhafte Ausführungsformen ergeben sich aus den Unteransprüchen.

Weitere Ziele, Vorteile und Zweckmäßigkeiten der vorliegenden Erfindung sind der nachfolgenden Beschreibung in Verbindung mit den Zeichnungen zu entnehmen. Hierbei zeigen:
- Fig. 1: schematisch eine erste Ausführungsform des Fahrzeugsitzes, dargestellt in dem nicht-ausgelenkten Zustand,
- Fig. 2: der Gegenstand der Figur 1 in einem nach unten ausgelenktem Zustand,
- Fig. 3: der Gegenstand der Figur 1 in einem nach oben ausgelenktem Zustand,
- Fig. 4: das Zusatzvolumenmodul gemäß einer ersten Ausführungsform in dem nicht-ausgelenkten Zustand,
- Fig. 5: das Zusatzvolumenmodul gemäß Figur 4 in dem nach unten ausgelenktem Zustand,
- Fig. 6: das Zusatzvolumenmodul gemäß Figur 4 in dem nach oben ausgelenktem Zustand,
- Fig. 7A: das Zusatzvolumenmodul gemäß einer zweiten Ausführungsform in einer Draufsicht,
- Fig. 7B: das Zusatzvolumenmodul gemäß Figur 7A in einer Schnittdarstellung,
- Fig. 7C: das Zusatzvolumenmodul gemäß Figur 7B mit schematischen Ergänzungen,
- Fig. 8A: das Zusatzvolumenmodul gemäß einer dritten Ausführungsform in einer Seitenansicht,
- Fig. 8B: das Zusatzvolumenmodul gemäß Figur 8A in einer Draufsicht,
- Fig. 8C: das Zusatzvolumenmodul gemäß Figur 8A in einer Vorderansicht.

In den Figuren sind gleiche Bauteile jeweils mit den entsprechenden Bezugszeichen zu verstehen. Zur besseren Übersichtlichkeit können in manchen Figuren Bauteile nicht mit einem Bezugszeichen versehen sein, die jedoch an anderer Stelle bezeichnet worden sind.

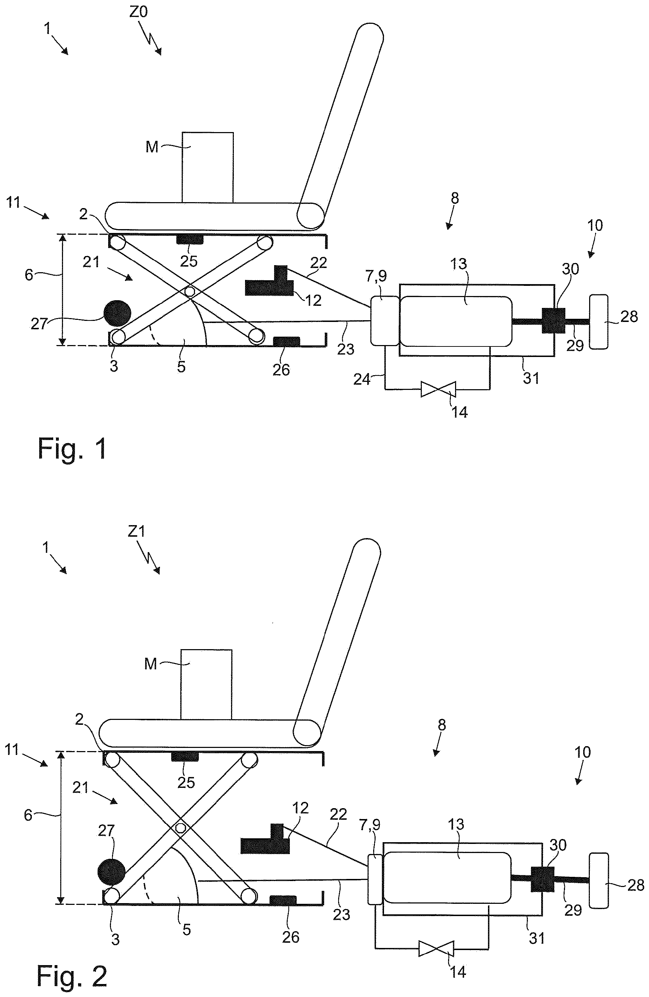

In der Figur 1 ist ein Fahrzeugsitz 1 gemäß einer bevorzugten Ausführungsform gezeigt, in einem nicht-ausgelenkten Zustand Z0.

Auf dem Fahrzeugsitzoberteil 2 ist hierbei eine Masse M angeordnet, welches beispielsweise eine Person sein kann. Zwischen dem Fahrzeugsitzoberteil 2 und dem Fahrzeugsitzunterteil 3 ist ein Abstand 6 eingestellt, welcher einhergeht mit einem bestimmten Druck in der Luftfeder 5, welche zwischen dem Fahrzeugsitzoberteil 2 und dem Fahrzeugsitzunterteil 3 angeordnet ist. Das Fahrzeugsitzunterteil 3 und das Fahrzeugsitzoberteil 2 sind vorliegend mittels eines Scherengestells 21 miteinander verbunden.

Eine Einstellung des Abstandes 6 erfolgte hierbei mit Hilfe einer Kompressoreinheit 12, welcher mittels einer ersten Fluidverbindung 22 mit dem Zusatzvolumenmodul 8 und insbesondere dem Arbeitsvolumen 7 fluidisch verbunden ist. Mittels der Kompressoreinheit 12 wird das Arbeitsvolumen 7 und indirekt durch eine zweite Fluidverbindung 23 die Luftfeder 5 mit eine Fluidmenge befüllt, um einen gewissen Druck in der Luftfeder 5 herzustellen.

Weiter ist ein Stützvolumen 13 vorgesehen, welches mechanisch mit dem Arbeitsvolumen 7 verbunden ist. Während dem Befüllen kann das Stützvolumen 13 mit dem Arbeitsvolumen 7 fluidisch verbunden sein, wobei im Normalbetrieb das Stützvolumen 13 und das Arbeitsvolumen 7 fluidisch voneinander getrennt sind. Zwischen dem Stützvolumen 13 und dem Arbeits ist eine dritte Fluidverbindung 24 mit einem Ventil 14 vorgesehen, wobei das Ventil 14 durchlassend geschalten ist während des Befüllens mit Fluid und ansonsten geschlossen ist.

Im Betrieb des Fahrzeugsitzes 1 mit der Vorrichtung 4, also nach Einstellung des Abstandes 6, mit einer Masse M ist die Kompressoreinheit 12 deaktiviert. Wird eine Änderung des Abstandes 6 mittels einer Erkennungseinheit 11 erkannt, so wird mittels einer Steuereinheit 10 das Volumen des Arbeitsvolumens 7 verändert, um den Druck in der Luftfeder 5 zu verändern.

Bevorzugt ist es auch denkbar, dass die Erkennungseinheit 11 und die Steuereinheit 10 Bestandteile des Zusatzvolumenmoduls 8 sind.

Weiter weist das Zusatzvolumenmodul 8 eine Steuereinheit 10 auf, umfassend einen Motor 28, welcher mit einer mit einer Spindel-Mutter-Kombination 19 umfassend eine Spindel 29 verbunden ist, wobei die Spindel 29 mit einer Mutter 30 verbunden ist, und wobei die Mutter 30 mit einer Verbindung 31 verbunden ist, die ebenso mit dem Arbeitsvolumen 7 und dem Stützvolumen 13 mechanisch verbunden ist.

Durch eine Rotationsbewegung der Spindel 29 wird die Mutter 30 entlang der Spindel 29 bewegt, so dass sich ebenso die Verbindung 31 bewegt und entsprechend das Arbeitsvolumen deformiert, so dass das Volumen 9 des Arbeitsvolumens 7 verändert wird.

Vorzugsweise sind Sensoren zum Bestimmen der Auslenkungen und der Positionen und des Abstand 6 vorgesehen, nämlich ein erster Sensor 25, ein zweiter Sensor 26 und ein dritter Sensor 27. Der erste Sensor 25 ist an dem Fahrzeugsitzoberteil 2, der zweite Sensor 26 an dem Fahrzeugsitzunterteil 3 und der dritte Sensor an der Verbindung zwischen Fahrzeugsitzunterteil 3 und Fahrzeugsitzoberteil 2, vorliegend vorzugsweise das Scherengestell 21, angeordnet. Der erste Sensor 25 und der zweite Sensor 26 sind als Beschleunigungssensoren ausgebildet, wobei der dritte Sensor 27 ausgebildet ist zum Bestimmen einer Position des Fahrzeugsitzoberteils 2 relativ zu dem Fahrzeugsitzunterteil 3, das heißt, dem Abstand 6.

In der Figur 2 ist der Fahrzeugsitz 1 der Figur 1 in einem nach unten ausgelenkten Zustand Z1 dargestellt, das heißt, dass sich der Abstand 6 zwischen dem Fahrzeugsitzoberteil 2 und dem Fahrzeugsitzunterteil 3 vergrößert. Dies ist beispielsweise der Fall, wenn das Fahrzeug in ein Schlagloch fährt, also nach unten ausgelenkt wird, wodurch ebenso das Fahrzeugsitzunterteil 3 nach unten ausgelenkt wird.

Durch die Bewegung des Fahrzeugsitzunterteils 3 nach unten wird die Luftfeder 5 expandiert und die Stützkraft daher verringert. Um dies auszugleichen, wird das Volumen 9 des Arbeitsvolumens 7 verkleinert und entsprechend der Druck erhöht, so dass durch die zweite Fluidleitung 23 der Druck in der Luftfeder 5 veränderbar ist.

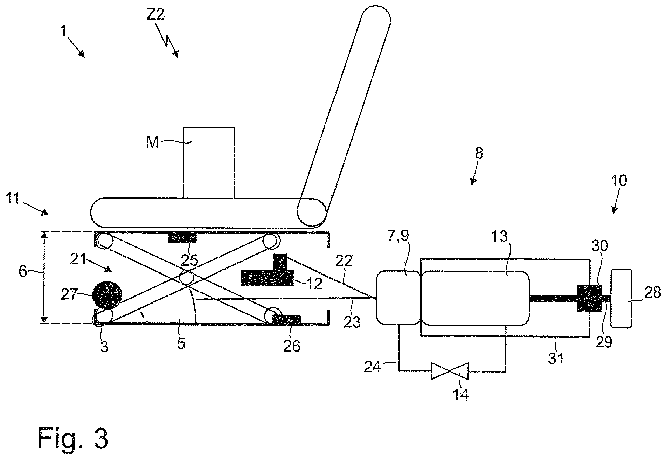

In der Figur 3 ist der Fahrzeugsitz der Figur 1 in einem nach oben ausgelenkten Zustand Z2 dargestellt, das heißt, dass sich der Abstand 6 zwischen dem Fahrzeugsitzoberteil 2 und dem Fahrzeugsitzunterteil 3 verringert. Dies ist beispielsweise der Fall, wenn das Fahrzeug über eine Erhöhung fährt, also nach oben ausgelenkt wird, wodurch ebenso das Fahrzeugsitzunterteil 3 nach oben ausgelenkt wird.

Durch die Bewegung des Fahrzeugsitzunterteils 3 nach oben wird die Luftfeder 5 komprimiert und die Stützkraft daher vergrößert. Um dies auszugleichen, wird das Volumen 9 des Arbeitsvolumens 7 vergrößert und entsprechend der Druck verringert, so dass durch die zweite Fluidleitung 23 der Druck in der Luftfeder 5 derart verändert wird, dass der Abstand des Fahrzeugsitzoberteils zu einer Referenzfläche im Wesentlichen unverändert ist.

Dadurch, dass der Druck in der Luftfeder 5 entsprechend verändert wird, ändert sich die Position des Fahrzeugsitzoberteils 2 relativ zu der Referenzfläche, bevorzugt die Erdoberfläche nicht.

Das Zusatzvolumenmodul 8 wird in den folgenden Figuren näher dargestellt. Ebenso werden verschiedene Ausführungsformen des Zusatzvolumenmoduls 8 gezeigt.

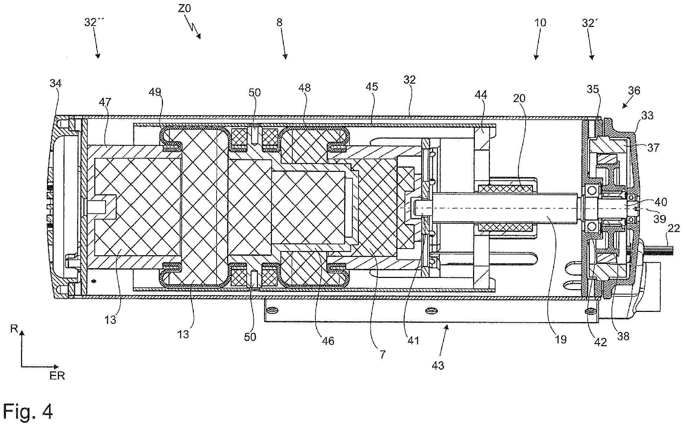

In den Figuren 4 bis 6 ist eine erste Ausführungsform des Zusatzvolumenmoduls 8 gezeigt.

Das Zusatzvolumenmodul 8 weist ein Gehäuse 32 auf, mit einem ersten Ende 32' und einem zweiten Ende 32". Bevorzugt ist das Gehäuse 32 zylinderförmig ausgebildet und erstreckt sich in einer Längserstreckungsrichtung ER. An dem ersten Ende 32' ist eine erste Abdeckung 33 und an dem zweiten Ende 32" eine zweite Abdeckung 34 angeordnet, welche das Zusatzvolumenmodul 8 abschließen. Von der ersten Abdeckung 33 in das Innere des Zusatzvolumenmoduls 8 ist ein erstes Halteelement 35 vorgesehen, wobei das erste Halteelement 35 und die erste Abdeckung dazu vorgesehen sind, einen Antrieb 36 örtlich zu fixieren, wobei der Antrieb 36 vorliegend als ein Elektromotor ausgebildet ist mit einem Stator 37 und einem Rotor 38, wobei der Stator 37 den Rotor 38 umgibt. Der Rotor 38 ist mit einer Spindel 29 verbunden, so dass sich der Rotor 38 und die Spindel 29 um eine gemeinsame Drehachse 39 drehen können. Die Spindel 29 weist vorzugsweise ein erstes Ende 40 und ein zweites Ende 41 auf, wobei das erste Ende 40 mit dem Rotor 38 starr verbunden ist. Die Spindel 29 ist dabei gegenüber dem ersten Halteelement 35 ortsfest angeordnet, wobei die Spindel 29 mittels eines Kugellagers 42 gegenüber dem ersten Halteelement 35 gelagert ist, um eine leichte Drehbarkeit der Spindel 29 gewährleisten zu können.

Das zweite Ende 41 der Spindel 29 ist meinem einem zweiten Halteelement 43 verbunden, wobei das zweite Halteelement 43 ortsfest gegenüber dem Gehäuse 32 angeordnet ist.

Weiter ist eine Mutter 30 vorgesehen, welche in Wirkkontakt mit der Spindel 29 steht, wobei durch eine Drehung der Spindel 29 um die Drehachse 39 die Mutter 30 entlang der Spindel 29 bewegt werden kann, abhängig von der Drehrichtung der Spindel 29 in Richtung des ersten Endes 40 oder in Richtung des zweiten Endes 41.

Die Mutter 30 ist dabei vorzugsweise starr mit einem kolbenähnlichen Element 44 starr verbunden, welches sich daher bei einer Bewegung der Mutter 30 entlang der Spindel 29 ebenso bewegt. Das kolbenähnliche Element 44 weist dabei ebenso eine Einhausung 45 auf, welche im Wesentlichen zylinderförmig ausgestaltet ist, und an welcher weiter ein Trennelement 46 ortsfest angeordnet ist. Die Funktion des Trennelements 46 wird im Nachfolgenden eingehender erklärt.

Weiter ist ein drittes Halteelement 47 vorgesehen, welches mit der zweiten Abdeckung 34 starr verbunden ist.

Dabei ist das Arbeitsvolumen 7 und das Stützvolumen 13 wie folgt ausgebildet.

Das Arbeitsvolumen 7 wird beschränkt durch das zweite Halteelement 43, dem Trennelement 46 und weiter durch ein erstes Balgelement 48, welches einerseits starr mit dem Trennelement 46 und andererseits starr mit dem zweiten Haltelement 43 verbunden ist. Das Volumen, welches durch das zweite Halteelement 43, dem Trennelement 46 und dem ersten Balgelement 48 eingeschlossen ist, definiert das Arbeitsvolumen 7.

Das Stützvolumen 13 hingegen wird beschränkt durch das dritte Halteelement 47, dem Trennelement 46 und einem zweiten Balgelement 49, welches einerseits starr mit dem Trennelement 46 und andererseits starr mit dem dritten Haltelement 47 verbunden ist. Das Volumen, welches durch das dritte Halteelement 47, dem Trennelement 46 und dem zweiten Balgelement 49 eingeschlossen ist, definiert das Stützvolumen 13.

Die Balgelemente 48, 49 sind dabei vorzugsweise als ein Rollbalg ausgebildet.

Weiter werden die Balgelemente 48, 49 in radialer Richtung R begrenzt durch die Einhausung, das heißt, dass das Arbeitsvolumen 7 und das Stützvolumen 13 zumindest teilweise innerhalb der Einhausung 45 angeordnet sind, abhängig von der Ausgestaltung der Einhausung 45.

Besonders bevorzugt sind die Balgelemente 48, 49 derart ausgebildet, dass sie an der Einhausung 45 abrollen.

Das Trennelement 46 ist mittels Schrauben 50 mit der Einhausung 45 verschraubt, wobei auch eine Nietenverbindung oder dergleichen denkbar ist.

In der Figur 4 ist das Zusatzvolumenmodul 8 in dem Zustand Z0 dargestellt, das heißt, in dem nicht-ausgelenkten Zustand des Fahrzeugsitzes 1.

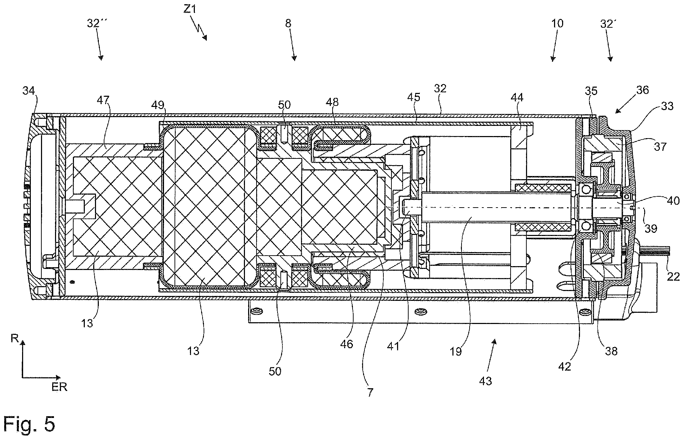

In der Figur 5 ist das Zusatzvolumenmodul 8 der Figur in dem Zustand Z1 dargestellt, das heißt, in dem nach unten ausgelenktem Zustand des Fahrzeugsitzes 1. Wie zu erkennen ist, wurde das Volumen 9 des Arbeitsvolumens 7 verkleinert, wodurch die Luftmenge bzw. der Druck in der Luftfeder 3 aufgrund der Expansion der Luftfeder 3 verändert werden kann. Dazu wurde mittels des Elektromotors die Spindel 29 um die Drehachse 39 derart gedreht, dass die Mutter 30 in Erstreckungsrichtung ER in Richtung des ersten Endes 40 der Spindel 29 bewegt wurde.

Das erste Halteelement 35 dient auch als ein Endanschlag für die Bewegung der Mutter 30, in Richtung des ersten Endes 40 der Spindel 29.

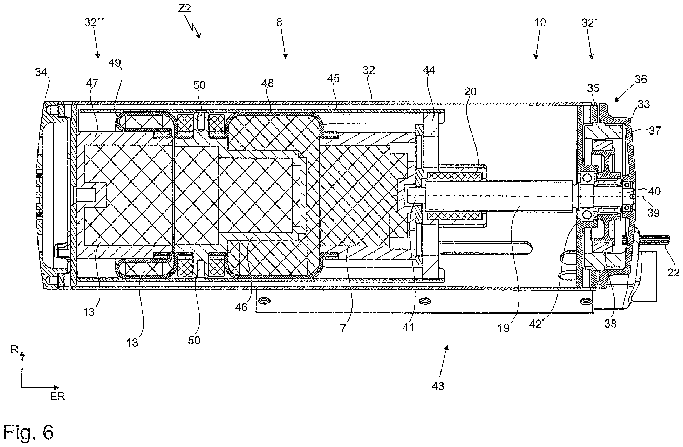

In der Figur 6 ist das Zusatzvolumenmodul 8 der Figur in dem Zustand Z2 dargestellt, das heißt, in dem nach oben ausgelenktem Zustand des Fahrzeugsitzes 1. Wie zu erkennen ist, wurde das Volumen 9 des Arbeitsvolumens 7 vergrößert, wodurch der Druck in der Luftfeder 3 aufgrund der Komprimierung der Luftfeder 3 verändert werden kann. Dazu wurde mittels des Elektromotors die Spindel 29 um die Drehachse 39 derart gedreht, dass die Mutter 30 in Erstreckungsrichtung ER in Richtung des zweiten Endes 41 der Spindel 29 bewegt wurde.

Entsprechend dem Aufbau des Zusatzvolumenmoduls 8 dient das zweite Halteelement 43 auch als ein Endanschlag für die Bewegung der Mutter 30, in Richtung des zweiten Endes 41 der Spindel 29.

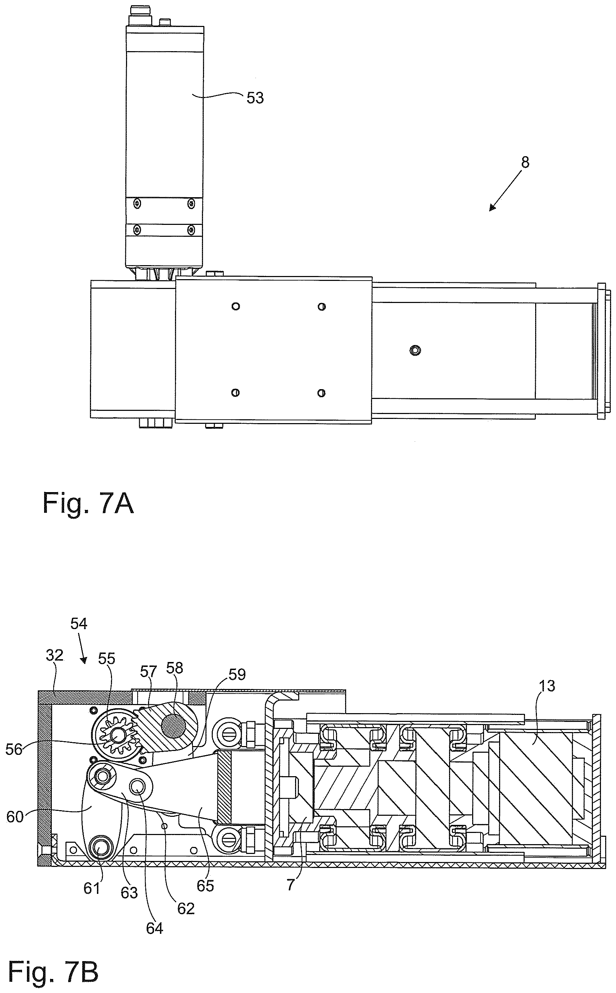

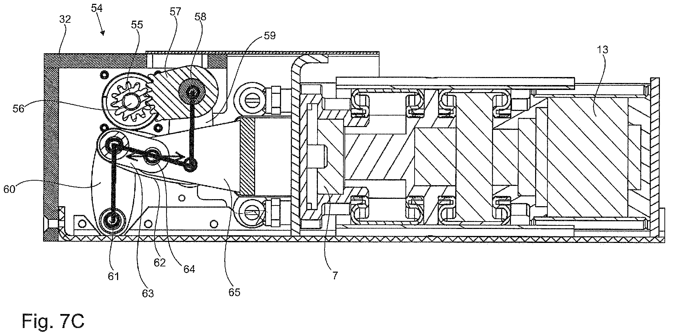

In den Figuren 7A, 7B und 7C ist eine alternative Steuereinheit 10 vorgesehen, welche sich im Gegensatz zu der Ausführungsform gemäß Figuren 4, 5 und 6 in der Art des Antriebs bzw. der Steuereinheit 10 unterscheidet. Die Ausführungen hinsichtlich des Arbeitsvolumens 7, des Stützvolumens 13 und der Ausbildung derer sind analog zu der Ausführungsform gemäß Figuren 4, 5 und 6.

Anstelle der Spindel 29 und der Mutter 30 ist nun ein Watt-Antrieb 54 beschrieben.

An dem Motor 53, welcher bevorzugt ein Elektromotor ist, ist ein Zahnrad 55 angeordnet, welches um eine dritte Drehachse 56 drehbar ist. Das Zahnrad 55 steht mit einem Zahnradelement 57 in Kontakt, welches um eine vierte Drehachse 58 drehbar gelagert ist. Mit dem Zahnradelement 57 ist ein erster Hebel 59 starr verbunden, so dass der erste Hebel 59 ebenso drehbar um die vierte Drehachse 58 ist.

Darüber hinaus ist ein zweiter Hebel 60 vorgesehen, welcher drehbar um eine fünfte Drehachse 61 mit dem Gehäuse verbunden ist. Weiter ist ein dritter Hebel 62 vorgesehen, welcher drehbar mit dem ersten Hebel 59 und dem zweiten Hebel 60 verbunden ist.

Ebenso ist ein vierter Hebel 63 vorgesehen, welcher parallel zu dem dritten Hebel 63 angeordnet ist und eine Anbindungsstelle 64 definiert, welche dem Punkt entspricht, welcher mittels des Watt-Antriebs nahezu auf einer Geraden bewegt werden kann. An der Anbindungsstelle 64 ist ein Anbindungselement 65 angeordnet, welches sich aufgrund des Watt-Antriebs nahezu auf einer Geraden bewegen kann. Durch die Bewegung des Anbindungselements 65 wird das Volumen des Arbeitsvolumen 7 verändert.

In der Figur 7C ist das Funktionsprinzip des Watt-Antriebs 54 nochmals schematisch dargestellt.

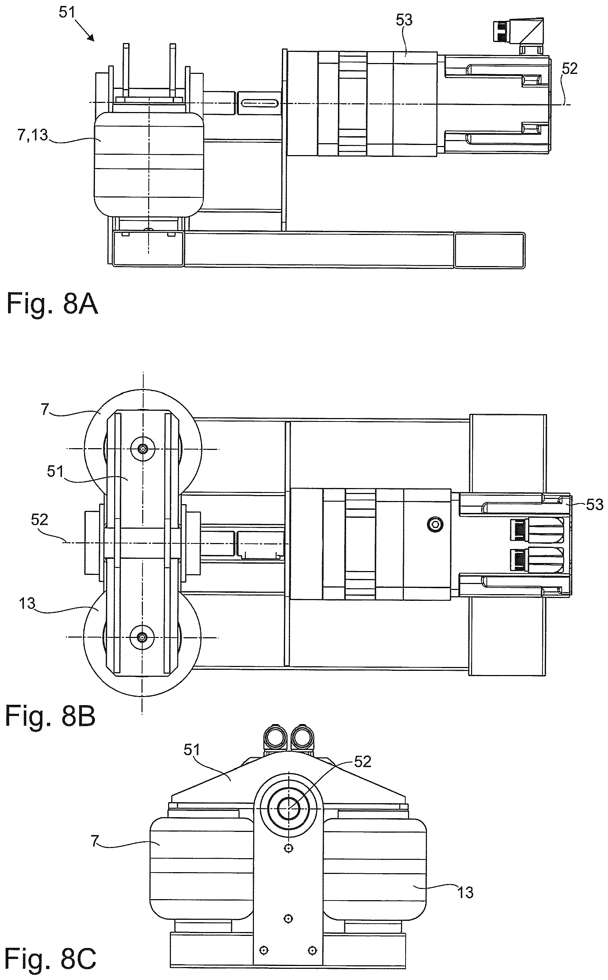

In den Figuren 8A, 8B und 8C ist eine alternative Steuereinheit 10 zum Verändern des Volumens 9 des Arbeitsvolumens 7 gezeigt. Dabei zeigt die Figur 8A die Steuereinheit 10 in einer Seitenansicht, die Figur 8B in einer Draufsicht und die Figur 8C in einer Vorderansicht.

Bevorzugt umfasst die Steuereinheit 10 einen Motor, insbesondere einen elektrischen Motor mit einem wippenähnlichen Deformationselement 51, welches je nach Drehrichtung des Motors das Arbeitsvolumen 7 und das Stützvolumen 13 deformiert. Eine Deformation kommt insbesondere dadurch zustande, da das Deformationselement 51 auf das jeweilige Volumen drückt, die Form hierdurch verändert und entsprechend das Volumen in dem Arbeitsvolumen 7 verändert und entsprechend den Druck in dem Arbeitsvolumen 7 ändert, so dass der Druck in der Luftfeder 5 entsprechend veränderbar ist.

Die Steuereinheit umfasst hierbei ein wippenähnliches Deformationselement 51, welches drehbar um eine zweite Drehachse 52 mit einem Motor 53 verbunden ist. Abhängig von der Drehrichtung des Motors 53 werden das Arbeitsvolumen 7 und das Stützvolumen 13 deformiert. Es ist ebenso denkbar, dass kein Stützvolumen 13 vorgesehen ist.

### Bezugszeichenliste

- 1: Fahrzeugsitz
- 2: Fahrzeugsitzoberteil
- 3: Fahrzeugsitzunterteil
- 4: Vorrichtung
- 5: Luftfeder
- 6: Abstand
- 7: Arbeitsvolumen
- 8: Zusatzvolumenmodul
- 9: Volumen des Arbeitsvolumens
- 10: Steuereinheit
- 11: Erkennungseinheit
- 12: Kompressoreinheit
- 13: Stützvolumen
- 14: Ventil
- 15: erster Sensor
- 16: zweiter Sensor
- 17: dritter Sensor
- 18: Linearantrieb
- 19: Spindel-Mutter-Kombination
- 21: Scherengestell
- 22: erste Fluidverbindung
- 23: zweite Fluidverbindung
- 24: dritte Fluidverbindung
- 25: erster Sensor
- 26: zweiter Sensor
- 27: dritter Sensor
- 28: Motor
- 29: Spindel
- 30: Mutter
- 31: Verbindung
- 32: Gehäuse
- 32': erstes Ende des Gehäuses
- 32": zweites Ende des Gehäuses
- 33: erste Abdeckung
- 34: zweite Abdeckung
- 35: erstes Halteelement
- 36: Antrieb
- 37: Stator
- 38: Rotor
- 39: Drehachse
- 40: erstes Ende der Spindel
- 41: zweites Ende der Spindel
- 42: Kugellager
- 43: zweites Halteelement
- 44: kolbenähnliches Element
- 45: Einhausung
- 46: Trennelement
- 47: drittes Halteelement
- 48: erstes Balgelement
- 49: zweites Balgelement
- 50: Schranke
- 51: wippenähnliches Deformationselement
- 52: zweite Drehachse
- 53: (Elektro-)Motor
- 54: Watt-Antrieb
- 55: Zahnrad
- 56: dritte Drehachse
- 57: Zahnradelement
- 58: vierte Drehachse
- 59: erster Hebel
- 60: zweiter Hebel
- 61: fünfte Drehachse
- 62: dritter Hebel
- 63: vierter Hebel
- 64: Anbindungsstelle
- 65: Anbindungselement
- M: Masse
- Z0: nicht ausgelenkt
- Z1: nach unten ausgelenkt
- Z2: nach oben ausgelenkt

## Patentansprüche

1. Fahrzeugsitz (1) mit einem Fahrzeugsitzoberteil (2), auf welchem eine Masse (M) anordenbar ist, einem Fahrzeugsitzunterteil (3) und mit einer Vorrichtung (4) zur Niveauregulierung und -stabilisierung des Fahrzeugsitzoberteils (2), wobei die Vorrichtung (4) eine Luftfeder (5) aufweist, mittels welcher eine Relativbewegung des Fahrzeugsitzunterteils (3) und des Fahrzeugsitzoberteils (2) zueinander federbar ist,
wobei das Fahrzeugsitzunterteil (3) und das Fahrzeugsitzoberteil (2) in einem nicht-ausgelenkten Zustand in einem vorgebbaren Abstand (6) zueinander angeordnet sind und wobei die Luftfeder (5) mit einem Volumen (7) eines Arbeitsvolumens (9) eines Zusatzvolumenmoduls (8) durch eine erste Fluidverbindung (22) fluidisch verbunden ist, **dadurch gekennzeichnet, dass**
der Fahrzeugsitz (1) eine Steuereinheit (10) aufweist, wobei die Steuereinheit (10) dazu vorgesehen und ausgebildet ist, bei einer Vergrößerung des Abstands (6) des Fahrzeugsitzunterteils (3) zu dem Fahrzeugsitzoberteil (2) aufgrund der Relativbewegung das Volumen (7) des Arbeitsvolumens (9) derart zu verringern, dass ein Druck in der Luftfeder (5) derart anpassbar ist, so dass ein Abstand des Fahrzeugsitzoberteils (2) zu einer Referenzfläche im Wesentlichen unverändert ist, und bei einer Verringerung des Abstands (6) des Fahrzeugsitzunterteils (3) zu dem Fahrzeugsitzoberteils (2) aufgrund der Relativbewegung das Volumen (7) des Arbeitsvolumens (9) derart zu vergrößern, dass der Druck in der Luftfeder (5) derart anpassbar ist, so dass der Abstand des Fahrzeugsitzoberteils (2) zu der Referenzfläche im Wesentlichen unverändert ist.

2. Fahrzeugsitz (1) nach Anspruch 1,
**dadurch gekennzeichnet, dass**
die Steuereinheit (10) an oder in dem Zusatzvolumenmodul (8) angeordnet ist.

3. Fahrzeugsitz (1) nach Anspruch 1 oder 2,
**dadurch gekennzeichnet, dass**
die Vorrichtung (4) eine Erkennungseinheit (11) aufweist, welche dazu ausgebildet und vorgesehen ist, die Änderung des Abstands (6) des Fahrzeugsitzunterteils (3) zu dem Fahrzeugsitzoberteils (2) zu erkennen, wobei die Steuereinheit (10) mit der Erkennungseinheit (11) signaltechnisch verbunden ist und abhängig von der erkannten Änderung des Abstands (6) des Fahrzeugsitzunterteils (3) zu dem Fahrzeugsitzoberteils (2) das Volumen (7) des Arbeitsvolumens (9) ändert.

4. Fahrzeugsitz (1) nach einem der Ansprüche 1 bis 3,
**dadurch gekennzeichnet, dass**
die Vorrichtung (4) eine Kompressoreinheit (12) aufweist, welche dazu ausgebildet und vorgesehen ist, die Luftfeder (5) und das Arbeitsvolumen (9) mit einem Fluid zu befüllen, so dass innerhalb der Luftfeder (5) ein bestimmter Druck vorherrscht, wodurch der Abstand vorgegeben ist.

5. Fahrzeugsitz (1) nach einem der vorhergehenden Ansprüche,
**dadurch gekennzeichnet, dass**
das Zusatzvolumenmodul (8) weiter ein Stützvolumen (13) aufweist, welches mit dem Arbeitsvolumen (9) zur Kraftunterstützung während einer Volumenänderung des Arbeitsvolumens (9) mittels der Steuereinheit (10) verbunden ist.

6. Fahrzeugsitz (1) nach Anspruch 4 und Anspruch 5,
wobei das Stützvolumen (13) während dem Befüllen mit Fluid der Luftfeder (5) durch die Kompressoreinheit (12) mittels eines geöffneten Ventils (14) mit dem Arbeitsvolumen (9) fluidisch verbunden ist und ansonsten fluidisch von dem Arbeitsvolumen (9) getrennt sind.

7. Fahrzeugsitz (1) nach Anspruch 3,
**dadurch gekennzeichnet, dass**
die Erkennungseinheit (11) einen ersten Sensor (25), angeordnet an dem Fahrzeugsitzoberteil (2), einen zweiten Sensor (26), angeordnet an dem Fahrzeugsitzunterteil (3), und einen dritten Sensor (27) zum Bestimmen einer Position des Fahrzeugsitzoberteils (2) relativ zu dem Fahrzeugsitzunterteil (3) aufweist.

8. Fahrzeugsitz (1) nach einem der vorhergehenden Ansprüche,
**dadurch gekennzeichnet, dass**
die Vorrichtung (4) einen Linearantrieb (18) aufweist, welcher dazu vorgesehen und ausgebildet ist, das Volumen (7) des Arbeitsvolumens (9) zu ändern.

9. Fahrzeugsitz (1) nach Anspruch 8,
**dadurch gekennzeichnet, dass**
der Linearantrieb (18) mindestens eines ist ausgewählt aus der Gruppe umfassend eine Spindel-Mutter-Kombination (29), eine Zahnstange, ein Umwandlungsgetriebe, ein Direktantrieb, eine Kulissenführung und eine Deformationseinrichtung.

10. Fahrzeugsitz (1) nach einem der vorhergehenden Ansprüche,
**dadurch gekennzeichnet, dass**
das Arbeitsvolumen (7) als eine Luftfeder (5) mit einem Rollbalg, als eine Balgfeder, ein Luftzylinder oder als ein Luftmotor ausgebildet ist.

11. Fahrzeugsitz nach Anspruch 5,
**dadurch gekennzeichnet, dass**
das Stützvolumen (13) als eine Luftfeder (5) mit einem Rollbalg, als eine Balgfeder, ein Luftzylinder oder als ein Luftmotor ausgebildet ist.

12. Verfahren zur Niveauregulierung und -stabilisierung eines Fahrzeugsitzoberteils (2) eines Fahrzeugsitzes (1), wobei der Fahrzeugsitz (1) ein durch eine Luftfeder (5) gegenüber einem Fahrzeugsitzunterteil (3) verlagerbares oberes Fahrzeugsitzoberteil (2) aufweist, wobei die Luftfeder (5) mit einem Arbeitsvolumen (7) eines Zusatzvolumenmoduls (8) fluidisch verbunden und der Druck in der Luftfeder (5) durch das Arbeitsvolumen (7) verändert wird, umfassend die Verfahrensschritte:
a) Belegen des Fahrzeugsitzoberteils (2) mit einer Masse (M);
b) Einstellen eines Abstandes (6) zwischen dem Fahrzeugsitzunterteil (3) und dem Fahrzeugsitzoberteil (2) durch Befüllen des Arbeitsvolumens (7) und der Luftfeder (5) durch einen Kompressor (12) mit einer benötigten Fluidmenge und Deaktivieren des Kompressors (12) nach dem Befüllen;
c) Erkennen einer Änderung des Abstandes (6) des Fahrzeugsitzunterteils (3) zu dem Fahrzeugsitzoberteils (2) durch eine Relativbewegung des Fahrzeugsitzunterteils (3) und des Fahrzeugsitzoberteils (1) zueinander;
d) Veränderung des Drucks in der Luftfeder (5) durch Veränderung eines Volumens (9) des Arbeitsvolumens, wobei bei einer Vergrößerung des Abstands (6) des Fahrzeugsitzunterteils (3) zu dem Fahrzeugsitzoberteils (2) aufgrund der Relativbewegung das Volumen (9) des Arbeitsvolumens (7) verringert wird und bei einer Verringerung des Abstands (6) des Fahrzeugsitzunterteils (3) zu dem Fahrzeugsitzoberteils (2) aufgrund der Relativbewegung das Volumen (9) des Arbeitsvolumens vergrößert wird, so dass der Druck in der Luftfeder (5) derart angepasst wird, so dass ein Abstand des Fahrzeugsitzoberteils (2) zu einer Referenzfläche im Wesentlichen unverändert ist.

## Claims

1. Vehicle seat (1) with an upper vehicle seat part (2), on which a mass (M) can be arranged, a lower vehicle seat part (3) and with a device (4) for levelling and stabilising the level of the upper vehicle seat part (2), the device (4) having an air spring (5), by means of which a relative movement of the lower vehicle seat part (3) and the upper vehicle seat part (2) with respect to one another can be spring-loaded,
wherein the lower vehicle seat part (3) and the upper vehicle seat part (2) are arranged in a non-deflected state at a predeterminable distance (6) from one another and wherein the air spring (5) is connected fluidically to a volume (7) of a working volume (9) of an auxiliary volume module (8) by means of a first fluid connection (22), **characterised in that**,
the vehicle seat (1) has a control unit (10), wherein the control unit (10) is provided and designed to, when the distance (6) between the lower vehicle seat part (3) and the upper vehicle seat part (2) increases due to the relative movement, reduce the volume (7) of the working volume (9) in such a way that that a pressure in the air spring (5) can be adjusted in such a way that a distance between the upper vehicle seat part (2) and a reference surface is essentially unchanged, and when the distance (6) between the lower vehicle seat part (3) and the vehicle seat upper part (2) is reduced due to the relative movement, to increase the volume (7) of the working volume (9) in such a way that that the pressure in the air spring (5) can be adjusted in such a way that the distance between the upper vehicle seat part (3)and the reference surface is essentially unchanged.

2. Vehicle seat (1) according to claim 1,
**characterised in that**,
the control unit (10) is arranged on or in the auxiliary volume module (8).

3. Vehicle seat (1) according to claim 1 or 2,
**characterised in that**,
the device (4) has a detection unit (11) which is provided and designed to detect the change in the distance (6) between the lower vehicle seat part (3) and the upper vehicle seat part (2), the control unit (10) being connected to the detection unit (11) by means of signalling technology and as a function of the detected change in the distance (6) changing the volume (7) of the working volume (9) between the lower vehicle seat part (3) and the upper vehicle seat part (3).

4. Vehicle seat (1) according to any one of claims 1 to 3,
**characterised in that**,
the device (4) has a compressor unit (12) which is provided and designed to fill the air spring (5) and the working volume (9) with a fluid so that a certain pressure prevails within the air spring (5), whereby the distance is predetermined.

5. Vehicle seat (1) according to one of the preceding claims,
**characterised in that**,
the auxiliary volume module (8) further comprises a support volume (13), which is connected to the working volume (9) for force support during a volume change of the working volume (9) by means of the control unit (10).

6. Vehicle seat (1) according to claim 4 and claim 5,
wherein the support volume (13) during filling of the air spring (5) with fluid by the compressor unit (12) is connected fluidically to the working volume (9) by means of an open valve (14) and is otherwise fluidically separated from the working volume (9).

7. Vehicle seat (1) according to claim 3,
**characterised in that**,
the detection unit (11) has a first sensor (25) arranged on the upper vehicle seat part (2), a second sensor (26) arranged on the lower vehicle seat part (3), and a third sensor (27) for determining a position of the upper vehicle seat part (2) relative to the lower vehicle seat part (3).

8. Vehicle seat (1) according to one of the preceding claims,
**characterised in that**,
the device (4) has a linear drive (18) which is provided and designed to change the volume (7) of the working volume (9).

9. Vehicle seat (1) according to claim 8,
**characterised in that**,
the linear actuator (18) is at least one selected from the group comprising a spindlenut combination (29), a rack, a conversion gear, a direct drive, a link guide, and a deformation device.

10. Vehicle seat (1) according to one of the preceding claims,
**characterised in that**,
the working volume (7) is designed as an air spring (5) with a rolling bellows, as a bellows spring, an air cylinder or as an air motor.

11. Vehicle seat (1) according to claim 5,
**characterised in that**,
the support volume (13) is designed as an air spring (5) with a rolling bellows, as a bellows spring, an air cylinder or as an air motor.

12. Method for levelling and stabilising of an upper vehicle seat part (2) of a vehicle seat (1), wherein the vehicle seat (1) has an upper vehicle seat part (2) displaceable relative to a lower vehicle seat part (3) by an air spring (5) , wherein the air spring (5) is fluidically connected to a working volume (7) of an auxiliary volume module (8) and the pressure in the air spring (5) is changed by the working volume (7), comprising the following steps:
a) Cover the upper part of the vehicle seat (2) with a mass (M);
b) Adjusting a distance (6) between the lower vehicle seat part (3) and the upper vehicle seat part (3) by filling the working volume (7) and the air spring (5) with a required quantity of fluid by means of a compressor (12) and deactivating the compressor (12) after filling;
c) Detecting a change in the distance (6) between the lower vehicle seat part (3) and the upper vehicle seat part (3) as a result of a relative movement of the lower vehicle seat part (3) and the upper vehicle seat part (2) in relation to one another;
d) Changing the pressure in the in spring (5) by changing a volume (9) of the working volume (7), wherein, when the distance (6) between the lower vehicle seat part (3) and the upper vehicle seat part (2) is increased, the volume (9) of the working volume (7) is reduced due to the relative movement and, when the distance (6) between the lower vehicle seat part (3) and the upper vehicle seat part (2) is reduced, the volume (9) of the working volume (7) is increase due to the relative movement, so that the pressure in the air spring (5) is adjusted in such a way that the distance between the upper vehicle seat part (2) and a reference surface remains essentially unchanged.

## Revendications

1. Siège de véhicule (1) comportant une partie supérieure (2) de siège de véhicule sur laquelle une masse (M) peut être disposée, une partie inférieure (3) de siège de véhicule et un dispositif (4) de régulation de niveau et de stabilisation de niveau de la partie supérieure (2) de siège de véhicule, le dispositif (4) présentant un ressort pneumatique (5) au moyen duquel un mouvement relatif de la partie inférieure (3) de siège de véhicule et de la partie supérieure (2) de siège de véhicule l'une par rapport à l'autre est à ressort,
la partie inférieure (3) de siège de véhicule et la partie supérieure (2) de siège de véhicule étant disposées à une distance (6) prédéterminable l'une de l'autre dans un état non défléchi, et le ressort pneumatique (5) étant relié fluidiquement à un volume (7) d'un volume de travail (9) d'un module de volume supplémentaire (8) par une première liaison fluidique (22),
**caractérisé par le fait que**
le siège de véhicule (1) présente une unité de commande (10), l'unité de commande (10) étant prévue et conçue pour diminuer le volume (7) du volume de travail (9) dans le cas d'une augmentation de la distance (6) de la partie inférieure (3) de siège de véhicule à la partie supérieure (2) de siège de véhicule en raison du mouvement relatif de telle sorte qu'une pression dans le ressort pneumatique (5) est ajustable de telle sorte qu'une distance de la partie supérieure (2) de siège de véhicule à une surface de référence reste sensiblement inchangée, et pour augmenter le volume (7) du volume de travail (9) dans le cas d'une diminution de la distance (6) de la partie inférieure (3) de siège de véhicule à la partie supérieure (2) de siège de véhicule en raison du mouvement relatif de telle sorte que la pression dans le ressort pneumatique (5) est ajustable de telle sorte que la distance de la partie supérieure (2) de siège de véhicule à la surface de référence reste sensiblement inchangée.

2. Siège de véhicule (1) selon la revendication 1,
**caractérisé par le fait que**
l'unité de commande (10) est disposée sur ou dans le module de volume supplémentaire (8).

3. Siège de véhicule (1) selon l'une des revendications 1 ou 2,
**caractérisé par le fait que**
le dispositif (4) présente une unité de détection (11), laquelle est conçue et prévue pour détecter la modification de la distance (6) de la partie inférieure (3) de siège de véhicule à la partie supérieure (2) de siège de véhicule, l'unité de commande (10) étant reliée à l'unité de détection (11) par une technique de signalisation et changeant le volume (7) du volume de travail (9) en fonction du changement détecté de la distance (6) de la partie inférieure (3) de siège de véhicule à la partie supérieure (2) de siège de véhicule.

4. Siège de véhicule (1) selon l'une des revendications 1 à 3,
**caractérisé par le fait que**
le dispositif (4) présente une unité compresseur (12), laquelle est conçue et prévue pour remplir le ressort pneumatique (5) et le volume de travail (9) avec un fluide de telle sorte qu'une pression spécifique prédomine à l'intérieur du ressort pneumatique (5), ce par quoi la distance est prédéterminée.

5. Siège de véhicule (1) selon l'une des revendications précédentes,
**caractérisé par le fait que**
le module de volume supplémentaire (8) présente en outre un volume de support (13), lequel est relié au volume de travail (9) pour un soutien de force lors d'un changement de volume du volume de travail (9) au moyen de l'unité de commande (10).

6. Siège de véhicule (1) selon la revendication 4 et la revendication 5,
dans lequel le volume de support (13) est relié fluidiquement au volume de travail (9) au moyen d'une soupape ouverte (14) lors du remplissage du ressort pneumatique (5) avec du fluide par l'unité compresseur (12) et est sinon séparé fluidiquement du volume de travail (9).

7. Siège de véhicule (1) selon la revendication 3,
**caractérisé par le fait que**
l'unité de détection (11) présente un premier capteur (25), disposé sur la partie supérieure (2) de siège de véhicule, un deuxième capteur (26), disposé sur la partie inférieure (3) de siège de véhicule, et un troisième capteur (27) pour déterminer une position de la partie supérieure (2) de siège de véhicule par rapport à la partie inférieure (3) de siège de véhicule.

8. Siège de véhicule (1) selon l'une des revendications précédentes,
**caractérisé par le fait que**
le dispositif (4) présente un entraînement linéaire (18), lequel est prévu et conçu pour changer le volume (7) du volume de travail (9).

9. Siège de véhicule (1) selon la revendication 8,
**caractérisé par le fait que**
l'entraînement linéaire (18) est au moins l'un choisi dans le groupe comportant une combinaison vis-écrou (29), une crémaillère, un engrenage de conversion, un entraînement direct, un guide à coulisse et un dispositif de déformation.

10. Siège de véhicule (1) selon l'une des revendications précédentes,
**caractérisé par le fait que**
le volume de travail (7) est conçu comme un ressort pneumatique (5) avec un soufflet roulant, comme un ressort à soufflet, un cylindre pneumatique ou comme un moteur pneumatique.

11. Siège de véhicule selon la revendication 5,
**caractérisé par le fait que**
le volume de support (13) est conçu comme un ressort pneumatique (5) avec un soufflet roulant, comme un ressort à soufflet, un cylindre pneumatique ou comme un moteur pneumatique.

12. Procédé de régulation de niveau et de stabilisation du niveau d'une partie supérieure (2) d'un siège de véhicule (1), le siège de véhicule (1) présentant une partie supérieure (2) de siège de véhicule qui est déplaçable par un ressort pneumatique (5) par rapport à une partie inférieure (3) de siège de véhicule, le ressort pneumatique (5) étant relié fluidiquement à un volume de travail (7) d'un module de volume supplémentaire (8) et la pression dans le ressort pneumatique (5) étant modifiée par le volume de travail (7), ledit procédé comportant les étapes de procédé suivantes :
a) garnir la partie supérieure (2) de siège de véhicule d'une masse (M);
b) régler une distance (6) entre la partie inférieure (3) de siège de véhicule et la partie supérieure (2) de siège de véhicule en remplissant le volume de travail (7) et le ressort pneumatique (5) par un compresseur (12) avec une quantité de fluide nécessaire et en désactivant le compresseur (12) après le remplissage ;
c) détecter un changement de la distance (6) de la partie inférieure (3) de siège de véhicule à la partie supérieure (2) de siège de véhicule par un mouvement relatif de la partie inférieure (3) de siège de véhicule et de la partie supérieure (1) de siège de véhicule ;
d) changer la pression dans le ressort pneumatique (5) en changeant un volume (9) du volume de travail, le volume (9) du volume de travail (7) étant diminué lorsque la distance (6) de la partie inférieure (3) de siège de véhicule à la partie supérieure (2) de siège de véhicule augmente en raison du mouvement relatif, et le volume (9) du volume de travail étant augmenté lorsque la distance (6) de la partie inférieure (3) de siège de véhicule à la partie supérieure (2) de siège de véhicule diminue en raison du mouvement relatif, de telle sorte que la pression dans le ressort pneumatique (5) est ajustée de telle sorte qu'une distance de la partie supérieure (2) de siège de véhicule à une surface de référence reste sensiblement inchangée.
